# EUROPEAN PATENT APPLICATION

(11) **EP 4 575 198 A1**
(43) Date of publication of application: **25.06.2025**
(21) Application number: 23854953.9
(22) Date of filing: 04.01.2023
(51) Int. Cl.: F01N 3/04, F01N 3/20, B01D 53/14, B01D 21/02, B63J 2/12, B63B 13/00, B63H 21/32

(54) **GREENHOUSE GAS EMISSION REDUCING DEVICE FOR SHIP AND SHIP OR OFFSHORE STRUCTURE COMPRISING SAME**

(30) Priority: 17.08.2022 KR 20220102672; 20.10.2022 KR 20220135809
(71) Applicant: Hanwha Ocean Co., Ltd., Geoje-si, Gyeongsangnam-do 53302 (KR)
(72) Inventor: NAM, Byung Tak, Geoje-si, Gyeongsangnam-do 53307 (KR)
(74) Representative: dompatent von Kreisler Selting Werner - Partnerschaft von Patent- und Rechtsanwälten mbB
(86) International application number: PCT/KR2023/000125
(87) International publication number: WO 2024/038978

(57) **Abstract**

The present invention provides an apparatus for reducing greenhouse gas emission in a vessel including a seawater supplying unit 110 for supplying seawater, an absorbent liquid circulation supplying unit 120 for providing and circulating absorbent liquid that absorbs CO₂, an absorption tower 130 including a CO₂ removing unit 131 that cools exhaust gas emitted from a vessel engine 10 by reacting with seawater and reacts cooled exhaust gas with an absorbent liquid to change CO₂ into an aqueous carbonate solution and to collect CO₂, an absorbent liquid regenerating unit 140 for reacting an aqueous carbonate solution with bivalent metal oxide or bivalent metal hydroxide to regenerate an absorbent liquid and generating sediment, and an outboard emission unit 150 for separating sediment to be emitted to the outside of a vessel by seawater. Accordingly, CO₂ is mineralized to be emitted to the outside of a vessel and corrosion of a separator 152 occurring due to seawater is minimized.

## Description

### TECHNICAL FIELD

The present invention relates to an apparatus for reducing greenhouse gas emission in a vessel and a vessel or an offshore structure including the same, and more particularly, to an apparatus for reducing greenhouse gas emission in a vessel and a vessel or an offshore structure including the same, wherein the apparatus mineralizes CO₂ to satisfy conditions for outboard emission to emit mineralized CO₂ to the outside of a vessel and minimizes corrosion of a separator occurring due to seawater.

### BACKGROUND ART

Recently, global warming phenomena and related environmental disasters are generated due to greenhouse gas emission caused by indiscriminate use of fossil fuel.

In this regard, a series of technologies relating to collecting and storing carbon dioxide, which is main greenhouse gas, without releasing carbon dioxide is called a Carbon dioxide Capture and Storage (CCS) technology and currently receives a wide attention. In the CCS technology, chemical absorption enables large-scale process and thereby, is widely commercialized.

Also, carbon dioxide emission is regulated through EEDI of IMO. A reduction of more than 50% of emission in 2008 is targeted in 2050 and 40% of emission in 2008 needs to be reduced in 2030. Accordingly, technologies which do not release CO₂ or collect released CO₂ draw attention.

For reference, CO₂ collecting technology included in the CCS technology which directly collects and stores carbon dioxide may be used in various ways according to conditions of CO₂ generation within an object process and mainly includes absorption, adsorption, and membrane separation. Here, wet-type absorption has high technical maturity in land plant and enables large-scale process of CO₂ and thereby, may be a collecting technology that is closest to commercialization of the CCS technology. A sorbent mainly includes an amine series and ammonia.

Meanwhile, the technology described above which reduces emission of carbon dioxide or collects generated carbon dioxide is not currently commercialized in a vessel, and a method of using hydrogen or ammonia as fuel is now being developed and does not reach a commercialization-level stage.

Also, in a vessel including a scrubber to use high sulfur fuel oil, solubility of SOx is high and thereby, high sulfur fuel oil is firstly changed into a compound such as NaSO₃. Accordingly, CO₂ may be hardly removed until Sox is completely dissolved. In particular, a consumable raw material of an absorbent liquid is separately used to remove CO₂ so that a cost of removing greenhouse gas increases.

In this regard, there is a need to apply a technology to a vessel which uses fossil fuel, wherein the technology is used to change CO₂ included in exhaust gas from an engine of the vessel into a material that does not influence the environment to be discharged or into a useful material to be stored, without separately preparing a consumable raw material of an absorbent liquid.

### DETAILED DESCRIPTION OF THE PRESENT INVENTION

### TECHNICAL PROBLEM

The present invention provides an apparatus for reducing greenhouse gas emission in a vessel and a vessel or an offshore structure including the same, wherein the apparatus mineralizes CO₂ to satisfy conditions for outboard emission to emit mineralized CO₂ to the outside of a vessel and minimizes corrosion of a separator occurring due to seawater.

### TECHNICAL SOLUTION

According to an aspect of the present invention, there is provided an apparatus for reducing greenhouse gas emission in a vessel including: an absorbent liquid circulation supplying unit for providing and circulating absorbent liquid that absorbs CO₂; an exhaust gas cooling unit for cooling exhaust gas emitted from a vessel engine; an absorption tower comprising a CO₂ removing unit that reacts the cooled exhaust gas with the absorbent liquid and changes CO₂ into an aqueous carbonate solution so as to collect CO₂; an absorbent liquid regenerating unit that reacts the aqueous carbonate solution with a regenerative reactant, regenerates the absorbent liquid, and produces sediments; and an outboard emission unit for separating sediment to be emitted to the outside of a vessel by seawater.

Here, the outboard emission unit may further perform a separating process between sediment and absorbent liquid, an emission process of sediment by using seawater, and a cleaning process by using freshwater.

Here, the outboard emission unit may absorb the sediment and the absorbent liquid from the absorbent liquid regenerating unit for separation, dilute the sediment with seawater to be emitted to the outside of a vessel in order to satisfy conditions for outboard emission, and if the sediment does not satisfy conditions for outboard emission, store the sediment in a separate storage tank.

More specifically, the outboard emission unit may include a separate pump that absorbs the sediment and the absorbent liquid from the absorbent liquid regenerating unit, a separator that separates the sediment and the absorbent liquid transferred from the separate pump so as to emit the sediment to the outside of a vessel and to return the absorbent liquid to the absorbent liquid circulation supplying unit, and a seawater emission pump that supplies the seawater to the separator so as to dilute the sediment with seawater to be emitted to the outside of a vessel.

Here, the separator may be a filter-form separator or a centrifuge-form separator which separates the sediment and the absorbent liquid from each other.

Also, the outboard emission unit may further include a freshwater supply valve that supplies the freshwater to the separator to clean the separator.

Here, the outboard emission unit may further include a freshwater cooler that cools the seawater supplied to the seawater emission pump with cooling freshwater.

Here, the sediment emitted from the separator may be diluted with seawater cooled from the freshwater cooler and is emitted to the outside of a vessel.

Also, the outboard emission unit may include sensors for measuring at least any one of turbidity, pH, and an oil content of the sediment separated from the separator so that the sediment may be emitted to the outside of a vessel or may be temporarily stored according to whether the sediment satisfies conditions for outboard emission that corresponds to values measured by the sensors.

Also, the sediments may include carbonate and the absorbent liquid, which is a monovalent alkaline aqueous solution, may include any one of a LiOH aqueous solution, a NaOH aqueous solution, a KOH aqueous solution, and a NH₄ OH aqueous solution.

Also, the apparatus may include a seawater supplying unit for supplying seawater from the outside of a vessel, wherein the seawater supplying unit may include a seawater pump and a seawater control valve and wherein the seawater pump receives the seawater through a sea chest from the outside of a vessel and pumps the seawater to the absorption tower and the seawater control valve controls an injection amount of the seawater supplied from the seawater pump to the absorption tower according to an amount of exhaust gas.

Here, the exhaust gas cooling unit may react exhaust gas emitted from the vessel engine with the seawater supplied from the seawater supplying unit and cool exhaust gas.

Also, the exhaust gas cooling unit may cool exhaust gas by reacting exhaust gas emitted from the vessel engine with freshwater.

Also, the exhaust gas cooling unit may cool exhaust gas by circulating freshwater provided from an on-board cooling system in a heat exchange pipe that covers a exhaust gas discharge pipe.

Also, the exhaust gas cooling unit may be installed in the absorption tower.

Also, the absorbent liquid circulation supplying unit may include an absorbent liquid storage tank for storing the absorbent liquid, an absorbent liquid pump for pumping and transferring the absorbent liquid from the absorbent liquid storage tank, an absorbent liquid circulation tank for mixing the aqueous carbonate solution emitted from the absorption tower with the absorbent liquid supplied from the absorbent liquid pump to be stored therein, and an absorbent liquid circulation pump for providing the absorbent liquid from the absorbent liquid circulation tank to the upper part of the CO₂ removing unit to be circulated.

Here, the absorbent liquid pump may supply the absorbent liquid to the absorbent liquid circulation tank in order to fill shortage of the absorbent liquid emitted to the outboard emission unit.

Also, the absorbent liquid may be generated by respectively electrolyzing seawater and freshwater and may be stored in the absorbent liquid storage tank.

Also, the apparatus may further include a seawater supplying unit for supplying seawater from the outside of a vessel, wherein the exhaust gas cooling unit is installed in the absorption tower, the absorption tower further includes a SOx absorption unit as an exhaust gas cooling unit which cools the exhaust gas by reacting the exhaust gas with the seawater supplied from the seawater supplying unit and removes SOx by dissolving SOx, and the CO₂ removing unit reacts the cooled exhaust gas, in which SOx is removed, with the absorbent liquid supplied from the absorbent liquid circulation supplying unit to be changed into an aqueous carbonate solution and to collect CO₂.

Also, the apparatus may further include a seawater supplying unit for supplying seawater from the outside of a vessel, wherein the absorption tower further includes a NOx absorption unit which absorbs and removes NOx of exhaust gas, the exhaust gas cooling unit is installed in the absorption tower and cools exhaust gas, in which NOx is removed, by being reacted with the seawater supplied from the seawater supplying unit, and the CO₂ removing unit reacts the cooled exhaust gas with the absorbent liquid supplied from the absorbent liquid circulation supplying unit to be changed into an aqueous carbonate solution and to collect CO₂.

Also, the apparatus may further include a seawater supplying unit for supplying seawater from the outside of a vessel, wherein the exhaust gas cooling unit is installed in the absorption tower, the absorption tower has a structure in which a NOx absorption unit, a SOx absorption unit, and a CO₂ removing unit are stacked in order, the NOx absorption unit absorbs and removes NOx of exhaust gas, the SOx absorption unit as an exhaust gas cooling unit which cools the exhaust gas, on which NOx is removed, by reacting the exhaust gas with the seawater supplied from the seawater supplying unit and removes SOx by dissolving SOx, and the CO₂ removing unit reacts the cooled exhaust gas, in which SOx is removed, with the absorbent liquid supplied from the absorbent liquid circulation supplying unit to be changed into an aqueous carbonate solution and to collect and remove CO₂.

Also, the NOx absorption unit comprises a Selective Catalyst Reduction (SCR).

Here, the NOx absorption unit may further include an urea solution storage tank for storing urea solution and an urea solution supplying pump which pumps urea solution from the urea solution storage tank and supplies the pumped urea solution to an injection nozzle inserted into the lower part of the SCR.

Also, the SOx absorption unit may further include a flow path through which exhaust gas passes, and multiple-stage seawater injection nozzles, wherein the seawater injection nozzles inject the seawater supplied from the seawater supplying unit in a lower direction according to opening and closing of a seawater control valve so as to dissolve SOx, to remove dust, and to cool exhaust gas.

Here, the SOx absorption unit may include a first temperature sensor and a second temperature sensor, each of which measures the temperature of exhaust gas before and after it passes the seawater injection nozzle, and may adjust an amount of seawater injected by the seawater injection nozzle according to an amount of exhaust gas or the measured temperature.

Also, the flow path may include a number of laminated plates including holes through which exhaust gas passes, a structure forming a bent flow path, or an absorber filled with a filling material, wherein the holes are alternately arranged and are spaced apart from each other at the top and the bottom and may include a bulkhead for preventing cleaning water from flowing backward or a cut-off plate which is in the form of an umbrella.

Also, the CO₂ removing unit may include a first injection nozzle, a first filling material, a second injection nozzle, and a second filling material, wherein the first injection nozzle injects absorbent liquid supplied from the absorbent liquid regenerating unit, the first filling material firstly reacts exhaust gas with absorbent liquid at the lower part of the first injection nozzle, the second injection nozzle injects absorbent liquid which is provided from the absorbent liquid circulation supplying unit and circulates, and the second filling material secondly reacts exhaust gas with absorbent liquid at the lower part of the second injection nozzle.

Here, the CO₂ removing unit may further include a mist removing plate, a bulkhead, or a cut-off plate, wherein the mist removing plate is formed on the upper part of the second injection nozzle and has a bent multi-plate structure that prevents emission of the absorbent liquid, the bulkhead prevents the absorbent liquid from flowing backward, and the cut-off plate has the form of an umbrella.

Also, the CO₂ removing unit may include a cooling jacket to cool heat generated from the first filling material and the second filling material.

Also, the CO₂ removing unit may monitor pH that corresponds to reaction extent in the first filling material and the second filling material and may adjust an injection amount of absorbent liquid.

Also, the absorbent liquid regenerating unit may include a regenerative reactant storage tank for storing the regenerative reactants, a transfer pump for pumping the aqueous carbonate solution and transferring the pumped aqueous carbonate solution, and a mixing tank for mixing and reacting the regenerative reactants with the aqueous carbonate solution to regenerate absorbent liquid, to generate solid-state carbonate, and to return the regenerated absorbent liquid to the absorption tower.

Here, the regenerative reactant may include bivalent metal oxide or bivalent metal hydroxide.

Also, the apparatus may further include a cleaning water processing unit which comprises a cleaning water tank for storing cleaning water emitted from the absorption tower, a water treatment equipment comprising a filtering unit that adjusts turbidity to satisfy conditions for outboard emission for cleaning water transferred from the cleaning water tank and a counteractive injection unit for adjusting pH, and a sludge storage tank that separates and stores solid-state emission.

Also, an EGE may be further included between the NOx absorption unit and the SOx absorption unit so that waste heat from the vessel engine and boiler water may be thermally exchanged.

Here, the apparatus may further include a steam generating unit including a sub-boiler, a boiler water circulating pump, a cascade tank, a supply pump, and a control valve, wherein the sub-boiler receives thermally exchanged steam and a saturated-form mixture and separates steam so as to supply separated steam to a steam consumable place, the boiler water circulating pump circulates and supplies boiler water from the sub-boiler to the EGE, the cascade tank collects condensate water from the steam consumable place, and the control valve and the supply pump controls an amount of boiler water and supplies boiler water from the cascade tank to the sub-boiler.

Also, the exhaust gas cooling unit may branch at least a part of exhaust gas emitted from the vessel engine to be cooled and the CO₂ removing unit may react the cooled exhaust gas with the absorbent liquid to change CO₂ into an aqueous carbonate solution so that CO₂ may be collected.

Here, the apparatus may further include a blowing means that supplies at least a part of the branched exhaust gas to the exhaust gas cooling unit.

Here, the blowing means may be a blower.

Also, residual exhaust gas, which is not branched to the exhaust gas cooling unit, from among exhaust gas emitted from the vessel engine may be emitted through a main exhaust pipe, and after CO₂ is collected, at least a part of exhaust gas, from which CO₂ is removed, branched to the exhaust gas cooling unit may be joined and emitted to the main exhaust pipe or may be emitted through a separate discharge pipe.

According to another aspect of the present invention, there is provided a vessel or an offshore structure including the apparatus for reducing greenhouse gas emission in a vessel described above.

### ADVANTAGEOUS EFFECTS

According to the present invention, carbonate separated by the separator is used to be emitted to the outside of a vessel by using seawater and the separator may be cleaned with freshwater to prevent corrosion of the separator occurring due to seawater. Also, greenhouse gas may be mineralized to reduce sea environmental pollution and materials that collect greenhouse gas may be emitted to the sea so that separate storage and unload facilities are not needed. In addition, NOx, SOx, and CO₂ may be simultaneously removed, Na₂ CO₃ , NaHCO₃ , (NH₄ )₂ CO₃ , and NH₄ HCO₃ may be stored in a solid state having less impurities, and CO₂ may be removed after SOx is removed so as to suppress a side reaction occurring by SOx remaining in exhaust gas. Accordingly, solubility of CO₂ and efficiency of removing CO₂ may be improved.

### DESCRIPTION OF THE DRAWINGS

FIG. 1 is a block diagram of an apparatus for reducing greenhouse gas emission in a vessel according to an embodiment of the present invention;
FIG. 2 is a system circuit diagram that embodies the apparatus for reducing greenhouse gas emission in a vessel of FIG. 1;
FIG. 3 separately illustrates a seawater supplying unit and an absorption tower included in FIG. 2;
FIG. 4 separately illustrates an absorbent liquid circulation supplying unit and an absorbent liquid regenerating unit included in FIG. 2;
FIG. 5 separately illustrates an outboard emission unit included in FIG. 2;
FIG. 6 separately illustrates a cleaning water processing unit included in FIG. 2;
FIG. 7 separately illustrates a steam generating unit included in FIG. 2;
FIG. 8 illustrates a CO₂ removing unit included in FIG. 3;
FIG. 9 illustrates a separating process included in processes performed in the outboard emission unit of FIG. 5;
FIG. 10 illustrates an emission process included in processes performed in the outboard emission unit of FIG. 5; and
FIG. 11 illustrates a cleaning process included in processes performed in the outboard emission unit of FIG. 5.

### BEST MODE

Hereinafter, embodiments of the present invention will be described in more detail with reference to the accompanying drawings.

An apparatus for reducing greenhouse gas emission in a vessel according to the embodiment of the present invention includes a seawater supplying unit 110 for supplying seawater, an absorbent liquid circulation supplying unit 120 for providing and circulating absorbent liquid that absorbs CO₂, an absorption tower 130 including a CO₂ removing unit 131 that cools exhaust gas emitted from a vessel engine 10 by reacting with seawater and reacts cooled exhaust gas with an absorbent liquid to change CO₂ into an aqueous carbonate solution and to collect CO₂, an absorbent liquid regenerating unit 140 for reacting an aqueous carbonate solution with bivalent metal oxide or bivalent metal hydroxide to regenerate an absorbent liquid and generating sediment, and an outboard emission unit 150 for separating sediment to be emitted to the outside of a vessel by seawater and for performing cleaning with freshwater. Accordingly, CO₂ is mineralized to be emitted to the outside of a vessel and corrosion of a separator 152 occurring due to seawater is minimized.

Here, the absorption tower may selectively or all include a NOx absorption unit or a SOx absorption unit, in addition to the CO₂ removing unit, according to a kind and specifications (a low-pressure engine or a high-pressure engine) of a vessel engine used as a main engine or a power generation engine and a kind of fuel supplied to a vessel engine (HFO, MDO, LNG, MGO, LSMGO, ammonia and etc.)

In particular, when LNG is used as fuel of a vessel engine, SOx is not generated and thereby, a SOx absorption unit may not be separately included. However, when Low Sulfur Marine Gas Oil (LSMGO) is used, a small amount of SOx may be generated. Accordingly, a SOx absorption unit which may simultaneously perform cooling of exhaust gas and absorption after dissolution of SOx may be further included.

Hereinafter, an absorption tower including a NOx absorption unit, a SOx absorption unit as an exhaust gas cooling unit, and a CO₂ removing unit that are stacked in order is described, however, the present invention is not limited thereto.

In particular, an exhaust gas cooling unit may cool exhaust gas emitted from a vessel engine to lower a temperature of exhaust gas and thereby, CO₂ may be smoothly absorbed by an absorbent liquid. Here, a SOx absorption unit which uses seawater may replace the role of the exhaust gas cooling unit or exhaust gas may be cooled by a heat exchanging method of freshwater. More specifically, freshwater provided from an on-board cooling system (not illustrated) circulates in a heat exchange pipe (not illustrated) that covers a exhaust gas discharge pipe where exhaust gas flows and exhaust gas may be cooled to a temperature of 27°C through 33°C by using a heat exchanging method of freshwater.

Here, a water cooling method which directly cools exhaust gas by using freshwater may reduce absorption performance of greenhouse gas, as a temperature of an absorbent liquid lowers due to insertion of freshwater. Accordingly, absorption performance of greenhouse gas needs to be constantly maintained in such a way that concentration of an absorbent liquid is prevented from being lowered by exhaust gas cooled by a heat exchanging method.

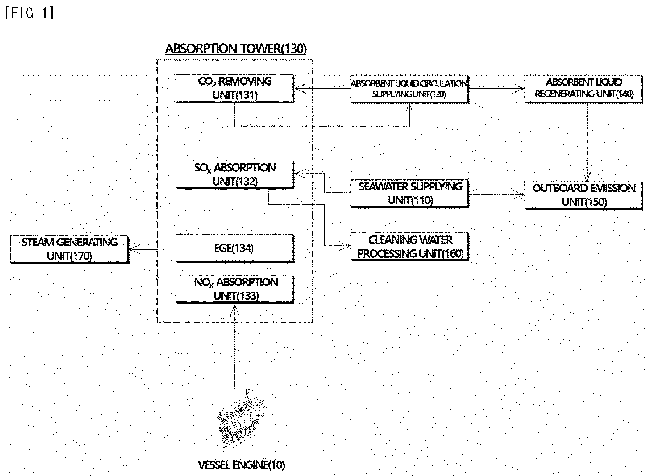

Hereinafter, the apparatus for reducing greenhouse gas emission in a vessel above will be described in more detail with reference to FIGS. 1 through 11.

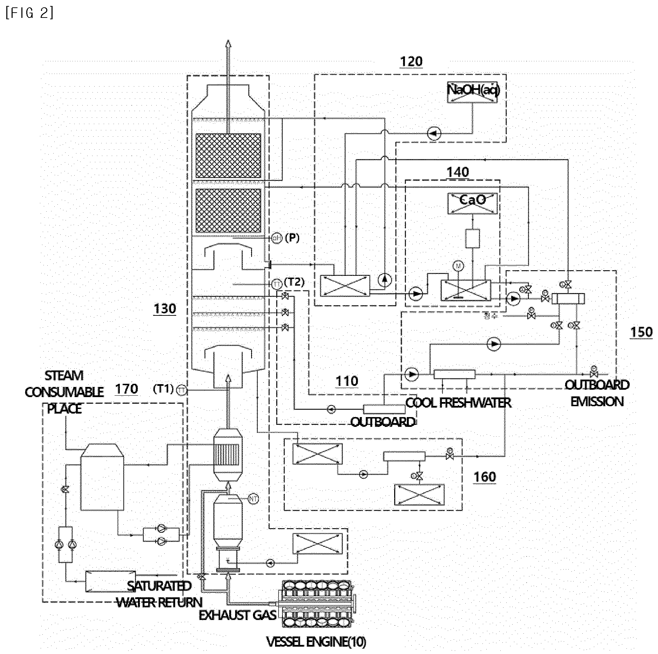

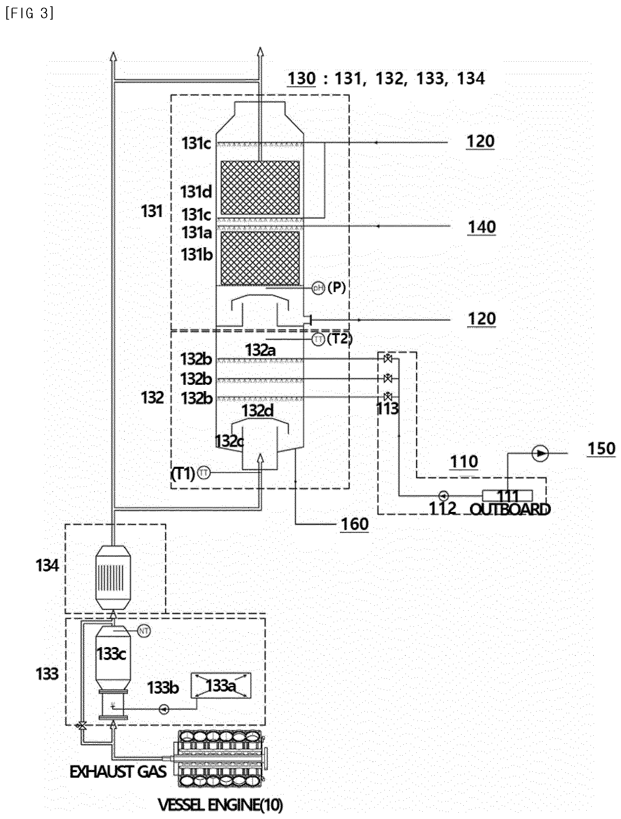

First, the seawater supplying unit 110 supplies seawater to the absorption tower 130 and the outboard emission unit 150. More specifically, as illustrated in FIGS. 2 and 3, the seawater supplying unit 110 may include a seawater pump 112 and a seawater control valve 113, wherein the seawater pump 112 absorbs and receives seawater through a sea chest 111 from the outside of a vessel and pumps seawater to a SOx absorption unit 132 and the seawater control valve 113 controls an injection amount of seawater supplied from the seawater pump 112 to the SOx absorption unit 132 according to an amount of exhaust gas. Here, the seawater pump 112 may be a quenching seawater pump.

For reference, according to whether a vessel berths or is at sea, seawater may be selectively supplied to the seawater pump 112 from a high sea chest or a low sea chest that respectively absorbs seawater at the upper part or seawater at the lower part according to depth of water. That is, when a vessel berths, seawater at the upper part is cleaner than seawater at the lower part and thereby, a high sea chest is used. When a vessel is at sea, seawater at the lower part is cleaner than seawater at the upper part and thereby, a low sea chest may be used.

Here, the seawater control valve 113 may be a hand operated diaphragm valve or a solenoid type valve which controls flow rate of seawater and may control an amount of seawater injected through a seawater injection nozzle according to an amount of exhaust gas.

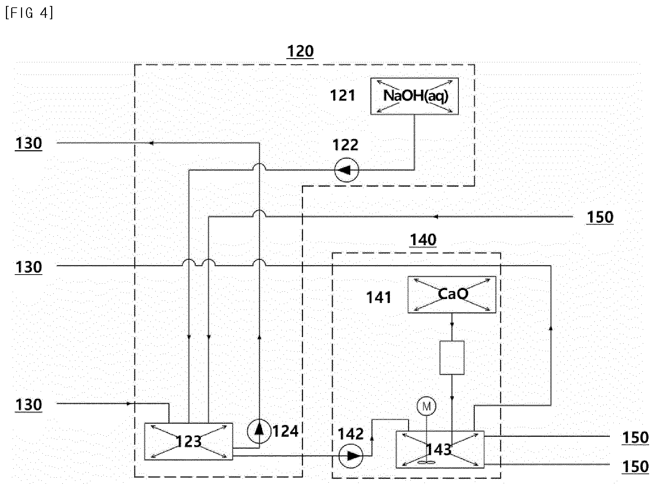

Next, the absorbent liquid circulation supplying unit 120 provides absorbent liquid that absorbs CO₂ included in exhaust gas and circulates the absorbent liquid to the absorption tower 130. More specifically, as illustrated in FIGS. 2 and 4, the absorbent liquid circulation supplying unit 120 may include an absorbent liquid storage tank 121, an absorbent liquid pump 122, an absorbent liquid circulation tank 123, and an absorbent liquid circulation pump 124, wherein the absorbent liquid storage tank 121 stores absorbent liquid, the absorbent liquid pump 122 pumps and transfers the absorbent liquid from the absorbent liquid storage tank 121 to the absorbent liquid circulation tank 123, the absorbent liquid circulation tank 123 mixes an aqueous carbonate solution emitted from the absorption tower 130 with the absorbent liquid supplied from the absorbent liquid pump 122 to be stored therein, and the absorbent liquid circulation pump 124 provides the absorbent liquid from the absorbent liquid circulation tank 123 to the upper part of the CO₂ removing unit 131 to be circulated.

Here, the absorbent liquid may be a monovalent alkaline aqueous solution including a LiOH (lithium hydroxide) aqueous solution, a NaOH (sodium hydroxide) aqueous solution, a KOH (potassium hydroxide) aqueous solution, or a NH₄ OH(ammonia) aqueous solution and may be, more preferably, a NaOH aqueous solution and/or a NH₄ OH aqueous solution.

Here, in a first step where exhaust gas reacts with an absorbent liquid, which is a monovalent alkaline aqueous solution, to be changed into an aqueous carbonate solution, CO₂ included in exhaust gas reacts with water to generate H₂CO₃ (carbonic acid) according to [Chemical Formula 1] below. Here, water reacting with CO₂ may exist in a monovalent alkaline aqueous solution which is absorbent liquid.

[Chemical Formula 1] CO₂ + H₂O → H₂CO₃

After the first step, when a monovalent alkaline aqueous solution which is absorbent liquid is a NaOH aqueous solution, NaHCO₃ (sodium bicarbonate), which is carbonate, and water or Na₂ CO₃ (sodium carbonate), which is carbonate, and water are generated according to [Chemical Formula 2] below to be changed into an aqueous carbonate solution.

[Chemical Formula 2] NaOH + H₂CO₃→ NaHCO₃ + H₂O 2NaOH + H₂CO₃→ Na₂CO₃+ 2H₂O

Also, after the first step, when a monovalent alkaline aqueous solution which is absorbent liquid is a NH₄ OH aqueous solution, NH₄ HCO₃ (ammonium bicarbonate), which is carbonate, and water or (NH₄)₂CO₃ (ammonium carbonate), which is carbonate, and water are generated according to [Chemical Formula 3] below to be changed into an aqueous carbonate solution.

[Chemical Formula 3] NH₄OH + H₂CO₃→ NH₄HCO₃+ H₂O 2NH₄OH + H₂CO₃→ (NH₄)₂CO₃ + 2H₂O

In addition, the absorbent liquid pump 122 may supply a certain amount of absorbent liquid to the absorbent liquid circulation tank 123 in order to fill shortage of absorbent liquid, as a part of absorbent liquid is emitted to the outside of a vessel along with carbonate when solid-state carbonate of CaCO₃ is separated and emitted to the outside of a vessel through the outboard emission unit 150.

Meanwhile, absorbent liquid of a NaOH aqueous solution may be generated by respectively electrolyzing seawater and freshwater and stored in the absorbent liquid storage tank 121. Also, power is generated through reduction and oxidation of Na so as to supply fixed rate of power applied for electrolysis and thereby, power needed to generate NaOH (aq) may be partially reduced.

For reference, absorbent liquid contacts exhaust gas and thereby, CO₂ is ionized in the form of ion in the absorption tower 130 and then, ionized absorbent liquid flows to the absorbent liquid circulation tank 123. Here, when CO₂ absorption occurs by CO₃²⁻ in absorbent liquid emitted from the CO₂ removing unit 131, concentration of HCO₃₋ ion is high and concentration of CO₃²⁻ is relatively low. In addition, absorbent liquid has relatively high temperature so that an amount of sediment is small and mostly exist in the form of ion. Accordingly, as concentration of HCO₃₋ ion increases while CO₂ is dissolved, absorbent liquid may be continuously used for CO₂ absorption until the concentration reaches a constant level.

Next, the absorption tower 130 includes the CO₂ removing unit 131 which cools exhaust gas emitted from the vessel engine 10 by reacting with seawater and reacts cooled exhaust gas with absorbent liquid so as to change CO₂ into an aqueous carbonate solution and to collect CO₂.

For example, the absorption tower 130 further includes the SOx absorption unit 132 which cools exhaust gas by reacting with seawater supplied from the seawater supplying unit 110 and dissolves SOx to be removed. The CO₂ removing unit 131 may cool exhaust gas, in which SOx is removed, by reacting with seawater supplied from the seawater supplying unit 110 and react cooled exhaust gas with absorbent liquid from the absorbent liquid circulation supplying unit 120 to be changed into an aqueous carbonate solution and to collect CO₂.

Also, the absorption tower 130 further includes the NOx absorption unit 133 which absorbs and removes NOx of exhaust gas. The CO₂ removing unit 131 may cool exhaust gas, in which NOx is removed, by reacting with seawater supplied from the seawater supplying unit 110 and react cooled exhaust gas with absorbent liquid from the absorbent liquid circulation supplying unit 120 to be changed into an aqueous carbonate solution and to collect CO₂.

In addition, in the absorption tower 130, the NOx absorption unit 133 which absorbs and removes NOx of exhaust gas, the SOx absorption unit 132 which uses seawater supplied from the seawater supplying unit 110 to react with and cool exhaust gas, in which NOx is removed, and to dissolve SOx so as to remove SOx, and the CO₂ removing unit 131 which reacts exhaust gas, in which SOx is removed, with absorbent liquid from the absorbent liquid circulation supplying unit 120 to be changed into an aqueous carbonate solution and to collect and remove CO₂ may be stacked in order.

More specifically, referring to FIG. 3, the CO₂ removing unit 131 may include a first injection nozzle 131a, a first filling material 131b, a second injection nozzle 131c, and a second filling material 131d, wherein the first injection nozzle 131a injects absorbent liquid supplied from the absorbent liquid regenerating unit 140, the first filling material 131b firstly reacts exhaust gas with absorbent liquid at the lower part of the first injection nozzle 131a, the second injection nozzle 131c injects absorbent liquid which is provided from the absorbent liquid circulation supplying unit 120 and circulates, and the second filling material 131d secondly reacts exhaust gas with absorbent liquid at the lower part of the second injection nozzle 131c.

Here, the second injection nozzle 131c may each branch into the first filling material 131b and the upper part of the second filling material 131d and may inject absorbent liquid in a lower direction.

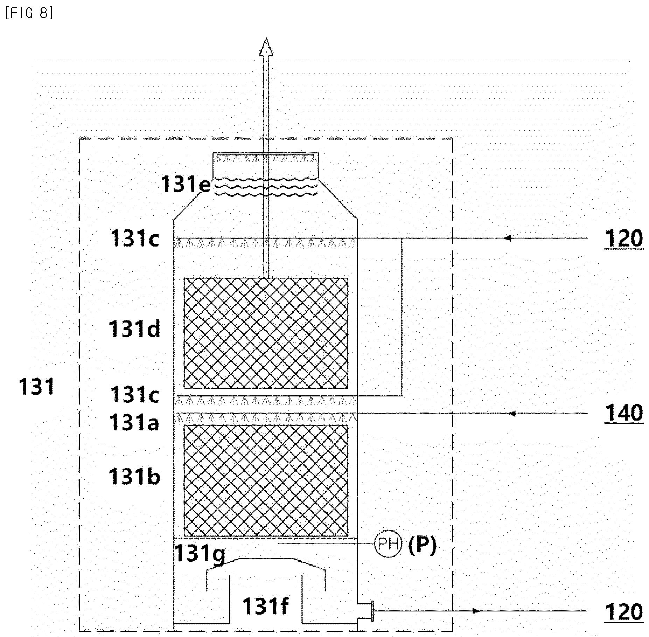

Also, as illustrated in FIG. 8, the CO₂ removing unit 131 may further include a mist removing plate 131e, a bulkhead 131f, or a cut-off plate 131g, wherein the mist removing plate 131e is formed on the upper part of the second injection nozzle 131c and has a bent multi-plate structure that forms a droplet to prevent a loss occurring due to external discharge of absorbent liquid, the bulkhead 131f prevents absorbent liquid from flowing backward to an exhaust gas pipe, and the cut-off plate 131g has the form of an umbrella.

In addition, the CO₂ removing unit 131 may include a cooling jacket (not illustrated) to cool heat generated from the first filling material 131b and the second filling material 131d so as to maintain a temperature of exhaust gas at 80°C through 100°C or to lower a temperature of absorbent liquid supplied from the first injection nozzle 131a and the second injection nozzle 131c by 10°C through 20°C. Accordingly, absorption rate of CO₂ increases in an exothermic process, in which CO₂ is absorbed to absorbent liquid and a loss of H₂O due to vaporization may be minimized.

Moreover, the first filling material 131b and the second filling material 131d may include multiple-stage distilling column packings which are designed for a contact area per unit volume to be large. Here, an appropriate distilling column packing may be selected in consideration of a contact area per unit area, pressure drop of gas, and flooding velocity and a solution redistributor is formed between multiple-stage distilling column packings so that a channeling phenomenon of a solution may be prevented.

Furthermore, the CO₂ removing unit 131 may continuously monitor pH that corresponds to reaction extent in the first filling material 131b and the second filling material 131d through a pH sensor P and may adjust an amount of absorbent liquid injected through the first injection nozzle 131a and the second injection nozzle 131c according to the reaction extent.

More specifically, referring to FIG. 3, the SOx absorption unit 132 may include a flow path 132a through which exhaust gas passes, and multiple-stage seawater injection nozzles 132b, wherein the seawater injection nozzles 132b inject seawater supplied from the seawater supplying unit 110 in a lower direction according to opening and closing of the seawater control valve 113 so as to dissolve SOx, to remove dust such as soot, and to cool exhaust gas.

Also, the SOx absorption unit 132 may include a first temperature sensor T1 and a second temperature sensor T2, each of which measures the temperature of exhaust gas before and after it passes the seawater injection nozzle 132b, and may adjust an amount of seawater injected by the seawater injection nozzle 132b according to an amount of exhaust gas and measured temperature.

In addition, the flow path 132a may include a number of laminated plates including holes through which exhaust gas passes, a structure forming a bent flow path, or an absorber filled with a filling material, wherein the holes are alternately arranged and are spaced apart from each other at the top and the bottom. Accordingly, a contact area of seawater with exhaust gas increases and thereby, cooling and absorption may be smoothly performed. Moreover, the SOx absorption unit 132 may include a bulkhead 132c and a cut-off plate 132d, wherein the bulkhead 132c prevents cleaning water from flowing backward and the cut-off plate 132d has the form of an umbrella.

In this regard, SOx is firstly removed through the SOx absorption unit 132 and then, CO₂ is removed through the CO₂ removing unit 131. Accordingly, SOx has high solubility and thereby, firstly changed into a compound such as Na₂SO₄. Therefore, a problem, in which CO₂ is hardly removed until Sox is completely dissolved, may be solved and thereby, efficiency of removing CO₂ may be improved.

For reference, cleaning water drained from the lower part of the SOx absorption unit 132 may include SO₃-, SO₄²⁻, soot, NaSO₃ , Na₂SO₄, MgCO₃, MgSO₄, and other ion compounds.

Meanwhile, the NOx absorption unit 133 may include a Selective Catalyst Reduction (SCR) 133c, an urea solution storage tank 133a for storing urea solution, and an urea solution supplying pump 133b which pumps urea solution from the urea solution storage tank 133a and supplies the pumped urea solution to an injection nozzle inserted into the lower part of the SCR 133c.

Also, an EGE 134 may be further included between the NOx absorption unit 133 and the SOx absorption unit 132 so that waste heat from the vessel engine 10 and boiler water may be thermally exchanged.

In addition, as illustrated in FIG. 3, the absorption tower 130 diverts (branch) at least a part of exhaust gas emitted from the vessel engine 10 to react with seawater to be cooled and reacts cooled exhaust gas with absorbent liquid to change CO₂ into an aqueous carbonate solution so that CO₂ may be collected.

That is, the absorption tower 130 includes a blowing means (not illustrated) that branches and supplies at least a part of exhaust gas to the SOx absorption unit 132 so that back pressure generated due to a pipe system of the absorption tower 130 may be minimized. Accordingly, the absorption tower 130 is designed to have a minimized diameter and an increased height and thereby, restrictions on an installation space may be overcome.

Here, the blowing means may include a blower. When the SOx absorption unit 132 is installed, the blower may be designed to blow or pressurized transfer exhaust gas which is at 40°C through 50°C and when the SOx absorption unit 132 is not installed, the blower may be designed to blow or pressurized transfer exhaust gas which is at around 300°C.

Here, residual exhaust gas, which is not branched to the absorption tower 130, from among exhaust gas emitted from the vessel engine is emitted through a main exhaust pipe. Also, after CO₂ is collected, at least a part of exhaust gas, from which CO₂ is removed, branched to the absorption tower 130 may be joined and emitted to the main exhaust pipe or may be emitted through a separate discharge pipe.

Next, the absorbent liquid regenerating unit 140 reacts an aqueous carbonate solution with bivalent metal oxide or bivalent metal hydroxide to regenerate absorbent liquid and generates sediment.

More specifically, referring to FIG. 4, the absorbent liquid regenerating unit 140 may include a regenerative reactant storage tank 141, a transfer pump 142, and a mixing tank 143, wherein the regenerative reactant storage tank 141 stores regenerative reactants of bivalent metal oxide (CaO) or bivalent metal hydroxide (Ca(OH)₂ ), the transfer pump 142 pumps an aqueous carbonate solution from the absorbent liquid circulation tank 123 and transfers the pumped aqueous carbonate solution to the mixing tank 143, and the mixing tank 143 mixes and reacts regenerative reactants with an aqueous carbonate solution to regenerate absorbent liquid, to generate solid-state carbonate (CaCO₃(s)), and to return regenerated absorbent liquid to the absorption tower 130 so as to be reused.

First, when NaOH reacts with CO₂ so as to generate NaHCO₃ (sodium bicarbonate) or Na₂ CO₃ (sodium carbonate) which is carbonate, NaHCO₃ (sodium bicarbonate) or Na₂ CO₃ (sodium carbonate) which is carbonate reacts with CaO (calcium oxide) according to [Chemical Formula 4] below so as to regenerate NaOH and to generate CaCO, which is carbonate, or reacts with Ca(OH)₂ (calcium hydroxide) according to [Chemical Formula 5] below so as to regenerate NaOH and to generate CaCO, which is carbonate.

[Chemical Formula 4] NaHCO₃ + CaO → NaOH + CaCO₃ Na₂CO₃ + CaO + H₂O → 2NaOH + CaCO₃

[Chemical Formula 5] NaHCO₃+ Ca(OH)₂→ NaOH + CaCO₃ + H₂O Na₂CO₃ + Ca(OH)₂→ 2NaOH + CaCO₃

Also, when NH₄ OH reacts with CO₂ so as to generate NH₄HCO₃ (ammonium bicarbonate) or (NH₄ )₂CO₃ (ammonium carbonate), NH₄HCO₃ (ammonium bicarbonate) or (NH₄ )₂CO₃ (ammonium carbonate) which is carbonate reacts with CaO (calcium oxide) according to [Chemical Formula 6] below so as to regenerate NH₄OH and to generate CaCO₃ which is carbonate, or reacts with Ca(OH)₂ (calcium hydroxide) according to [Chemical Formula 7] below so as to regenerate NH₄OH and to generate CaCO₃ which is carbonate.

[Chemical Formula 6] NH₄HCO₃+ CaO → NH₄OH + CaCO₃ (NH₄)₂CO₃+ CaO + H₂O → 2NH₄OH + CaCO₃

[Chemical Formula 7] NH4HCO3 + Ca(OH)2 → NH₄OH + CaCO₃ + H₂O (NH₄)₂CO₃ + Ca(OH)₂ → 2NH₄OH + CaCO₃

Here, when HCO₃- ionic concentration of the absorbent liquid circulation tank 123 increases, absorbent liquid is transferred to the mixing tank 143 through the transfer pump 142. Here, while a mineralizing is performed at a following process, absorbent liquid having concentration that enables CO₂ to be continuously absorbed may be transferred to the mixing tank 143.

Also, the mixing tank 143 reacts absorbent liquid including ionized CO₂ with CaO or Ca(OH)₂ so that absorbent liquid may be regenerated, CO₂ may be changed into CaCO, , OH- ion may be supplied from CaO or Ca(OH)₂ according to the reactions of [Chemical Formula 4] through [Chemical Formula 7], and CO3²⁻ and Ca₂+ are combined to each other to generate solid-state insoluble CaCO₃.

Next, the outboard emission unit 150 separates sediments of CaCO₃(s) so as to be emitted to the outside of the vessel by seawater as a form of sediment basically included in marine environment and cleans the separator 152 by using freshwater.

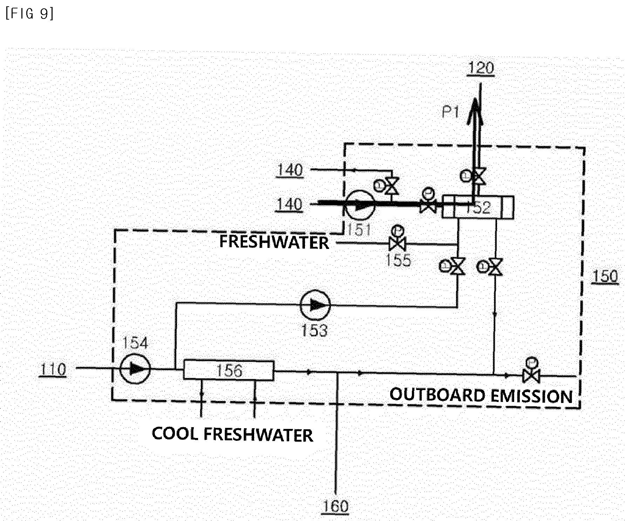

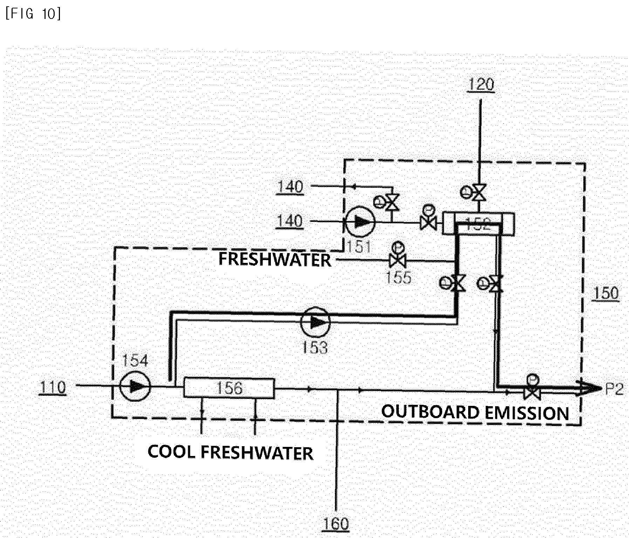

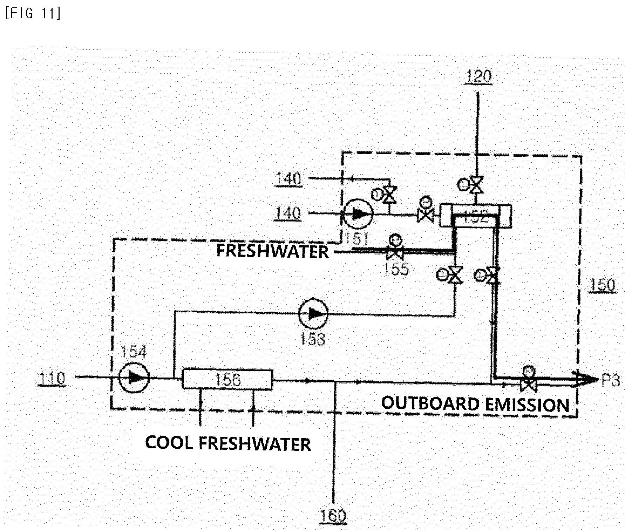

That is, the outboard emission unit 150 may sequentially perform a separating process between sediment and absorbent liquid along a path P1 illustrated in FIG. 9, an emission process of sediment by using seawater along a path P2 illustrated in FIG. 10, and a cleaning process by using freshwater along a path P3 illustrated in FIG. 11.

Meanwhile, the outboard emission unit 150 absorbs sediment and absorbent liquid from the absorbent liquid regenerating unit 140 for separation and dilutes the sediment with seawater to be emitted to the outside of a vessel in order to satisfy conditions for outboard emission. Here, when sediment does not satisfy conditions for outboard emission, the outboard emission unit 150 may temporarily store sediment in a separate storage tank (not illustrated).

For example, the outboard emission unit 150 may include sensors (not illustrated) for respectively measuring turbidity, pH, and an oil content of sediment separated from the separator 152 so that sediment may be emitted to the outside of a vessel or may be temporarily stored according to whether sediment satisfies conditions for outboard emission that corresponds to values measured by the sensors.

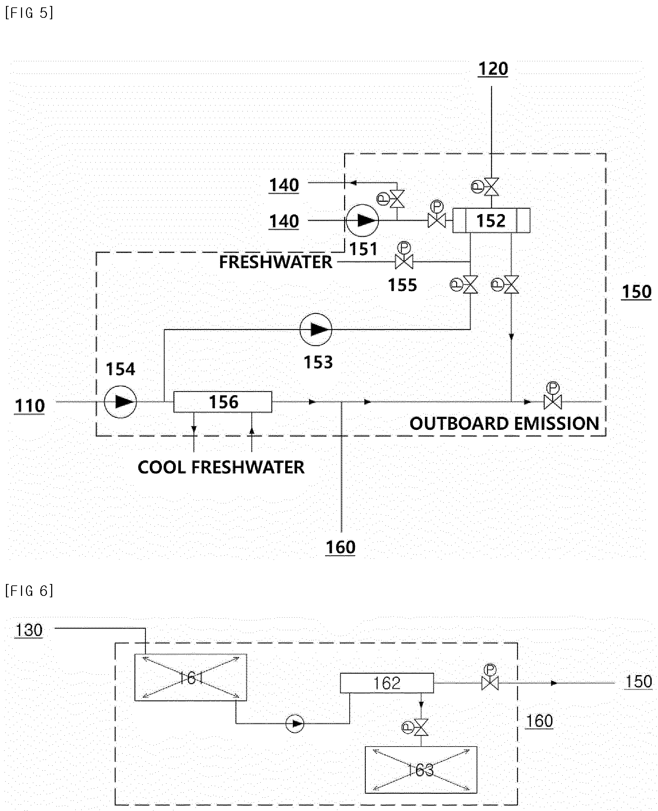

More specifically, referring to FIG. 5, the outboard emission unit 150 may include a separate pump 151, the separator 152, a seawater emission pump 153, and a seawater cooling pump 154, wherein the separate pump 151 absorbs sediment and absorbent liquid from the absorbent liquid regenerating unit 140, the separator 152 separates sediment and absorbent liquid transferred from the separate pump 151 so as to emit sediment to the outside of a vessel and to return absorbent liquid to the absorbent liquid circulation supplying unit 120, the seawater emission pump 153 supplies cooled seawater to the separator 152 so as to dilute sediment with seawater to be emitted to the outside of a vessel, and the seawater cooling pump 154 supplies seawater used in cooling to the seawater emission pump 153 from a sea chest 111.

Here, the separator 152 may be a filter-form separator or a centrifuge-form separator which separates sediment and absorbent liquid from each other.

Also, the outboard emission unit 150 may further include a freshwater supply valve 155 which supplies freshwater to the separator 152 to clean the separator 152 so that the separator 152 may be prevented from being corroded by seawater and regenerated absorbent liquid may be prevented from being mixed with seawater.

In addition, the outboard emission unit 150 may further include a freshwater cooler 156 which cools seawater supplied to the seawater emission pump 153 with cooling freshwater so that sediment emitted from the separator 152 may be diluted with seawater cooled from the freshwater cooler 156 and may be emitted to the outside of a vessel.

Next, as illustrated in FIG. 6, the cleaning water processing unit 160 includes a cleaning water tank 161, a water treatment equipment 162, and a sludge storage tank 163, wherein the cleaning water tank 161 stores cleaning water emitted from the absorption tower 130, the water treatment equipment 162 includes a filtering unit that adjusts turbidity to satisfy conditions for outboard emission for cleaning water transferred from the cleaning water tank 161 and a counteractive injection unit for adjusting pH, and the sludge storage tank 163 that separates and stores solid-state emission.

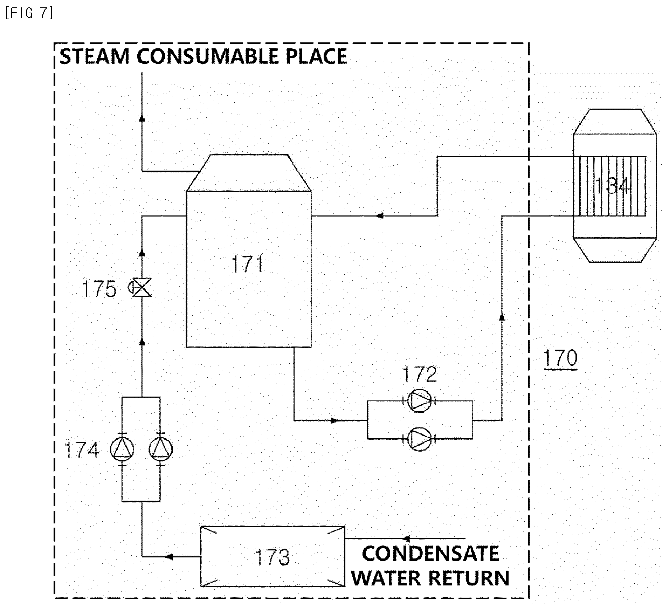

Next, as illustrated in FIG. 3, the EGE 134 may be further included between the NOx absorption unit 133 and the SOx absorption unit 132 so that waste heat from the vessel engine 10 and boiler water may be thermally exchanged. More specifically, as illustrated in FIG. 7, the steam generating unit 170 includes a sub-boiler 171, a boiler water circulating pump 172, a cascade tank 173, a supply pump 174, and a control valve 175, wherein the sub-boiler 171 receives steam thermally exchanged through the EGE 134 and a saturated-form mixture and separates steam by a steam drum (not illustrated) so as to supply separated steam to an on-board steam consumable place, the boiler water circulating pump 172 circulates and supplies boiler water from the sub-boiler 171 to the EGE 134, the cascade tank 173 collects condensate water in which a phase thereof is changed after being consumed from the steam consumable place and then, condensed, and the control valve 175 and the supply pump 174 controls an amount of boiler water and supplies boiler water from the cascade tank 173 to the sub-boiler 171. Accordingly, steam needed for heating equipment in a vessel may be generated and supplied.

Here, when a load of the vessel engine 10 is high, a quantity of heat which may be provided from exhaust gas is high and thereby, an amount of steam needed in a vessel may be sufficiently generated through the EGE 134. However, if not, fuel is burnt in the sub-boiler 171 and then, necessary steam may be generated.

According to another embodiment of the present invention, a vessel or an offshore structure including the apparatus for reducing greenhouse gas emission in a vessel described above is provided.

According to the embodiments of the present invention, carbonate separated by the separator is used to be emitted to the outside of a vessel by using seawater and the separator may be cleaned with freshwater to prevent corrosion of the separator occurring due to seawater. Also, greenhouse gas may be mineralized to reduce sea environmental pollution and materials that collect greenhouse gas may be emitted to the sea so that separate storage and unload facilities are not needed. In addition, NOx, SOx, and CO₂ may be simultaneously removed, Na₂ CO₃ , NaHCO₃ , (NH₄ )₂ CO₃ , and NH₄ HCO₃ may be stored in a solid state having less impurities, and CO₂ may be removed after SOx is removed so as to suppress a side reaction occurring by SOx remaining in exhaust gas. Accordingly, solubility of CO₂ and efficiency of removing CO₂ may be improved.

While the present invention has been described with reference to exemplary embodiments and drawings, it will be understood by those skilled in the art that various changes may be made and equivalents may be substituted for elements thereof without departing from the scope of the invention as defined by the appended claims.

## Claims

1. An apparatus for reducing greenhouse gas emission in a vessel comprising:
an absorbent liquid circulation supplying unit for providing and circulating absorbent liquid that absorbs CO₂;
an exhaust gas cooling unit for cooling exhaust gas emitted from a vessel engine;
an absorption tower comprising a CO₂ removing unit that reacts the cooled exhaust gas with the absorbent liquid and changes CO₂ into an aqueous carbonate solution so as to collect CO₂;
an absorbent liquid regenerating unit that reacts the aqueous carbonate solution with a regenerative reactant, regenerates the absorbent liquid, and produces sediments; and
an outboard emission unit for separating sediment to be emitted to the outside of a vessel by seawater.

2. The apparatus of claim 1, wherein the outboard emission unit further performs a separating process between sediment and absorbent liquid, an emission process of sediment by using seawater, and a cleaning process by using freshwater.

3. The apparatus of claim 2, wherein the outboard emission unit absorbs the sediment and the absorbent liquid from the absorbent liquid regenerating unit for separation, dilutes the sediment with seawater to be emitted to the outside of a vessel in order to satisfy conditions for outboard emission, and if the sediment does not satisfy conditions for outboard emission, stores the sediment in a separate storage tank.

4. The apparatus of claim 3, wherein the outboard emission unit comprises a separate pump that absorbs the sediment and the absorbent liquid from the absorbent liquid regenerating unit, a separator that separates the sediment and the absorbent liquid transferred from the separate pump so as to emit the sediment to the outside of a vessel and to return the absorbent liquid to the absorbent liquid circulation supplying unit, and a seawater emission pump that supplies the seawater to the separator so as to dilute the sediment with seawater to be emitted to the outside of a vessel.

5. The apparatus of claim 4, wherein the separator is a filter-form separator or a centrifuge-form separator which separates the sediment and the absorbent liquid from each other.

6. The apparatus of claim 4, wherein the outboard emission unit further comprises a freshwater supply valve that supplies the freshwater to the separator to clean the separator.

7. The apparatus of claim 6, wherein the outboard emission unit further comprises a freshwater cooler that cools the seawater supplied to the seawater emission pump with cooling freshwater.

8. The apparatus of claim 7, wherein the sediment emitted from the separator is diluted with seawater cooled from the freshwater cooler and is emitted to the outside of a vessel.

9. The apparatus of claim 4, wherein the outboard emission unit comprises sensors for measuring at least any one of turbidity, pH, and an oil content of the sediment separated from the separator so that the sediment is emitted to the outside of a vessel or is temporarily stored according to whether the sediment satisfies conditions for outboard emission that corresponds to values measured by the sensors.

10. The apparatus of claim 3, wherein the sediments comprise carbonate and the absorbent liquid, which is a monovalent alkaline aqueous solution, comprises any one of a LiOH aqueous solution, a NaOH aqueous solution, a KOH aqueous solution, and a NH₄ OH aqueous solution.

11. The apparatus of claim 1, further comprising a seawater supplying unit for supplying seawater from the outside of a vessel, wherein the seawater supplying unit comprises a seawater pump and a seawater control valve and wherein the seawater pump receives the seawater through a sea chest from the outside of a vessel and pumps the seawater to the absorption tower and the seawater control valve controls an injection amount of the seawater supplied from the seawater pump to the absorption tower according to an amount of exhaust gas.

12. The apparatus of claim 11, wherein the exhaust gas cooling unit reacts exhaust gas emitted from the vessel engine with the seawater supplied from the seawater supplying unit and cools exhaust gas.

13. The apparatus of claim 1, wherein the exhaust gas cooling unit cools exhaust gas by reacting exhaust gas emitted from the vessel engine with freshwater.

14. The apparatus of claim 1, wherein the exhaust gas cooling unit cools exhaust gas by circulating freshwater provided from an on-board cooling system in a heat exchange pipe that covers a exhaust gas discharge pipe.

15. The apparatus of claim 1, wherein the exhaust gas cooling unit is installed in the absorption tower.

16. The apparatus of claim 1, wherein the absorbent liquid circulation supplying unit comprise
an absorbent liquid storage tank for storing the absorbent liquid,
an absorbent liquid pump for pumping and transferring the absorbent liquid from the absorbent liquid storage tank,
an absorbent liquid circulation tank for mixing the aqueous carbonate solution emitted from the absorption tower with the absorbent liquid supplied from the absorbent liquid pump to be stored therein, and
an absorbent liquid circulation pump for providing the absorbent liquid from the absorbent liquid circulation tank to the upper part of the CO₂ removing unit to be circulated.

17. The apparatus of claim 16, wherein the absorbent liquid pump supplies the absorbent liquid to the absorbent liquid circulation tank in order to fill shortage of the absorbent liquid emitted to the outboard emission unit.

18. The apparatus of claim 16, wherein the absorbent liquid is generated by respectively electrolyzing seawater and freshwater and stored in the absorbent liquid storage tank.

19. The apparatus of claim 1, further comprising a seawater supplying unit for supplying seawater from the outside of a vessel, wherein the exhaust gas cooling unit is installed in the absorption tower, the absorption tower further comprises a SOx absorption unit as an exhaust gas cooling unit which cools the exhaust gas by reacting the exhaust gas with the seawater supplied from the seawater supplying unit and removes SOx by dissolving SOx, and the CO₂ removing unit reacts the cooled exhaust gas, in which SOx is removed, with the absorbent liquid supplied from the absorbent liquid circulation supplying unit to be changed into an aqueous carbonate solution and to collect CO₂.

20. The apparatus of claim 1, further comprising a seawater supplying unit for supplying seawater from the outside of a vessel, wherein the absorption tower further comprises a NOx absorption unit which absorbs and removes NOx of exhaust gas, the exhaust gas cooling unit is installed in the absorption tower and cools exhaust gas, in which NOx is removed, by being reacted with the seawater supplied from the seawater supplying unit, and the CO₂ removing unit reacts the cooled exhaust gas with the absorbent liquid supplied from the absorbent liquid circulation supplying unit to be changed into an aqueous carbonate solution and to collect CO₂.

21. The apparatus of claim 1, further comprising a seawater supplying unit for supplying seawater from the outside of a vessel, wherein the exhaust gas cooling unit is installed in the absorption tower, the absorption tower has a structure in which a NOx absorption unit, a SOx absorption unit, and a CO₂ removing unit are stacked in order, the NOx absorption unit absorbs and removes NOx of exhaust gas, the SOx absorption unit as an exhaust gas cooling unit which cools the exhaust gas, on which NOx is removed, by reacting the exhaust gas with the seawater supplied from the seawater supplying unit and removes SOx by dissolving SOx, and the CO₂ removing unit reacts the cooled exhaust gas, in which SOx is removed, with the absorbent liquid supplied from the absorbent liquid circulation supplying unit to be changed into an aqueous carbonate solution and to collect and remove CO₂.

22. The apparatus of claim 20 or 21, wherein the NOx absorption unit comprises a Selective Catalyst Reduction (SCR).

23. The apparatus of claim 1, wherein the absorbent liquid regenerating unit comprises
a regenerative reactant storage tank for storing the regenerative reactants,
a transfer pump for pumping the aqueous carbonate solution and transferring the pumped aqueous carbonate solution, and
a mixing tank for mixing and reacting the regenerative reactants with the aqueous carbonate solution to regenerate absorbent liquid, to generate solid-state carbonate, and to return the regenerated absorbent liquid to the absorption tower.

24. The apparatus of claim 23, wherein the regenerative reactant comprises bivalent metal oxide or bivalent metal hydroxide.

25. The apparatus of claim 1, further comprising a cleaning water processing unit which comprises
a cleaning water tank for storing cleaning water emitted from the absorption tower,
a water treatment equipment comprising a filtering unit that adjusts turbidity to satisfy conditions for outboard emission for cleaning water transferred from the cleaning water tank and a counteractive injection unit for adjusting pH, and
a sludge storage tank that separates and stores solid-state emission.

26. The apparatus of claim 1, wherein the exhaust gas cooling unit branches at least a part of exhaust gas emitted from the vessel engine to be cooled and the CO₂ removing unit reacts the cooled exhaust gas with the absorbent liquid to change CO₂ into an aqueous carbonate solution so that CO₂ is collected.

27. The apparatus of claim 26, further comprising a blowing means that supplies at least a part of the branched exhaust gas to the exhaust gas cooling unit.

28. The apparatus of claim 27, wherein the blowing means is a blower.

29. The apparatus of claim 26, wherein residual exhaust gas, which is not branched to the exhaust gas cooling unit, from among exhaust gas emitted from the vessel engine is emitted through a main exhaust pipe, and after CO₂ is collected, at least a part of exhaust gas branched to the exhaust gas cooling unit is joined and emitted to the main exhaust pipe and or is emitted through a separate discharge pipe.

30. A vessel or an offshore structure comprising the apparatus for reducing greenhouse gas emission in a vessel of any one of claims 1 through 21.
